Europäisches Patentamt

(19) European Patent Office

Office européen des brevets

(11) **EP 0 524 721 B1**

(12) **EUROPEAN PATENT SPECIFICATION**

(45) Date of publication and mention
of the grant of the patent:
**25.08.1999 Bulletin 1999/34**

(51) Int. Cl.$^6$: **A01N 25/34**, B65D 65/46

(21) Application number: **92305305.2**

(22) Date of filing: **10.06.1992**

(54) **New packaging/containerization system for gels**

Verpackungs/Behältersystem für Gele

Système d'emballage/conteneurisation pour gels

(84) Designated Contracting States:
**AT BE CH DE DK ES FR GB GR IT LI LU NL PT SE**

(30) Priority: **11.06.1991 US 713681**
**11.06.1991 US 713682**
**11.06.1991 US 713683**
**11.06.1991 US 713684**
**11.06.1991 US 713685**
**11.06.1991 US 713701**
**27.03.1992 US 859131**

(43) Date of publication of application:
**27.01.1993 Bulletin 1993/04**

(73) Proprietor:
**RHONE-POULENC AGROCHIMIE**
**69009 Lyon (FR)**

(72) Inventors:
• **Gouge, Samuel T.**
**Raleigh, North Carolina 27614 (US)**

• **Aldred, Alan James**
**Norwich, Norfolk (GB)**
• **Dudley Rose, Richard John**
**Calgary, Alberta T2M 4L4 (CA)**
• **Chauncey, Raymond Marion**
**Amelia Island, Florida 32034 (US)**
• **Mc Evoy, Steven Foster**
**Jacksonville, Florida 32217 (US)**

(74) Representative: **Bentham, Stephen**
**J.A. KEMP & CO.**
**14 South Square**
**Gray's Inn**
**London WC1R 5LX (GB)**

(56) References cited:
**EP-A- 0 347 222**      **WO-A-92/01374**
**GB-A- 2 244 258**      **US-A- 5 080 226**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to new containerisation systems containing hazardous products in a gelled composition which are safe for handling and for the environment. The invention relates also to methods of manufacturing the containerisation systems and to their use in protecting the agricultural environment and in increasing the safety of people working with agrochemicals.

At present, most hazardous liquids are stored in metal drums or, where smaller quantities are required, plastic containers.

Hazardous compounds, especially agrochemical compounds, are formulated in various compositions, solid or liquid. Liquid compositions are most convenient for farmers because of the relative ease with which they can be handled. There are, nevertheless, difficulties in handling such liquid compositions. There is a danger of spillage or leakage if there are holes in the containers previously used or if they are dropped. Although secure containers resistant to shock can be used, in the event of an accident, for example during transportation, the risk remains of spillage or leakage with rapid loss of liquid, for example leaking onto the ground.

It is also known to use water soluble bags in order to reduce the contact between people and hazardous products, but the bags may break so that some risk still exists.

It has been difficult to provide a formulation and a containing system which safeguards those handling it, including farmers and transporters, and the environment. This difficulty is particularly increased because the farmers are generally not very careful when handling materials.

The present invention seeks to provide a new containerisation system to contain hazardous products, especially agrochemicals, which is safe for handling, and for the environment.

The invention further seeks to provide a new containerisation system for agrochemicals which is as condensed as possible and uses the least amount of space possible.

The invention further seeks to provide a new containerisation system to contain hazardous compounds e.g. agrochemicals, which diminishes the risks of pollution.

As already said, it is known that agrochemicals may be contained in soluble bags or sachets made from films. Many kinds of active ingredients or pesticides may be used with water soluble bags. Due to the need of dispersibility in the tank of the farmer, the active ingredient should remain in a finely divided state. Powders may thus be used in water soluble bags, as well as liquid or gels or granules. However, water soluble bags may break when dropped, e.g. during transportation, handling, storage or the like. In particular, therefore, the invention seeks to provide containerisation systems comprising a cold water soluble bag and a hazardous compound such an agrochemical, which have good resistance to failure when dropped.

EP-A-0,347,222 discloses a package containing from a quarter to three litres of a liquid, to be dissolved or dispensed in water, contained in an envelope of water soluble or dispensible material.

The invention further seeks to provide an effective packaging containing a hazardous compound, as active ingredient, in a gel.

The invention further seeks to provide a shock absorbing containerisation system for containing agrochemicals, e.g. pesticides (such as insecticides, acaricides, fungicides, herbicides, nematicides) or plant protection agents or plant growth regulators.

The present invention yet further seeks to provide a containerisation system for containing agrochemicals which has very efficient shock absorbing properties, especially when dropped.

The present invention seeks to provide a new formulation system for agrochemicals which quickly dissolves or disperses when put into water, especially cold water in tanks of farmers, such as those commonly used for preparing spray mixtures.

The present invention provides a containerisation system which comprises a concentrated hazardous composition contained in a cold water soluble or water dispersible bag wherein the bag has a residual inflatability of greater than 15% of the volume of the bag when fully inflated and wherein the hazardous composition is in the form of a gel having a viscosity from 1,000 to 30,000 centipoises, a spontaneity less than 25, and a phase difference (phi) between the controlled shear stress and the resulting shear strain such that tg(phi) is less than or equal to 1.5.

The bag used is a cold water soluble or dispersible bag, which is soluble or dispersible, preferably soluble, in water at a temperature less than 35°C.

The present invention further provides a method of manufacturing such containerisation systems and their use in the storage or transpart of agrochemicals.

The bag used in the invention is inflatable to a volume greater than the initial volume of the contents (hazardous composition and optionally air or gas space) of the bag, to provide the residual inflatability. Thus, the bag is filled to less than complete capacity, with the hazardous composition, and the unused capacity may partially, but not totally, be filled with air or any other gas preferably an inert gas. The unused capacity which does not contain gas provides the residual inflatability.

More precisely, the residual inflatability has the following meaning : assuming that the inside volume of a bag completely filled or completely inflated is 100 volume units, and that it contains y volume unit of hazardous composition and x volume units of gas space when closed, the residual inflatability (expressed in the form of a percentage) is 100 - x -y . This is the definition and wording which is constantly used hereafter. Thus the actual volume of the closed bag is x + y volume units, but could be 100 if completely inflated or filled.

According to the invention, the bag of the containerisation system has generally a residual inflatability of greater than 15% (as previously defined, it is a percentage of the volume of the inflated bag) and generally less than 70%. Preferably the residual, inflatability is less than 40%, more preferably less than 30% and most preferably less than 20% of the volume of the inflated bag.

In the containerisation system of the invention, an air or gas space may fill a part of the volume of the bag. However it is considered that the residual inflatability is most efficient in imparting resistance to shock and dropping of water soluble bags containing agrochemicals, if the volume of air or gas space is partially or totally reduced. Thus, air or gas space may be generally less than 20%, preferably less than 10%, of the volume of the bag in its filled but uninflated state. In one specific embodiment it is advantageous, to have no air or gas space in the bag (or an air or gas space less than 1%).

With or without an air or gas space within the bag, the bag may be inflated to a volume greater than the content of the bag (that is to say the actual volume of the composition contained in the closed bag plus the volume of the optional air space).

The advantageous effect of the invention upon gelled compositions is substantial, due to the fact such compositions transmit shock so that bags containing them may thus be broken and/or leak.

The compositions used in the invention are not diluted compositions for direct application on the soil or on the plant or on the area to be treated (whether it is a crop area or a non crop area), but they are in a concentrate form, that is to say in the form which is common for commercialization and they need to be diluted before use, especially before spraying. Thus the compositions used in the invention comprise generally more than 1 % and up to 95 % of hazardous product, preferably more than 20 % and up to 60 % (percentage are w/w unless contrary indicated) of hazardous product.

Of course, the compositions used in the invention may contain all the known ingredients such as solvent(s), surfactant(s), dispersant(s), emulsifier(s), gelling agents or thickener(s) or thickening agent(s), or other additives, such as stabilizer(s), antifoaming agent(s), buffer(s), antifreezing agent(s).

Among the compositions of the invention as hereabove defined, some are preferred, especially those comprising one or more of the following constituents, (and/or having one or more of the following characteristics) :

the size of the suspended particles, if any, is less than 50 microns, preferably less than 20 microns,
they comprise 1 to 95 %, more preferably 15 to 80 %, of the active ingredient or hazardous product,
they comprise 0.1 to 50 %, more preferably 2 to 15 %, of the surfactant,
they comprise 0 to 50 %, more preferably 1 to 10 %, of the thickener(s) or gelling agent,
they comprise 0 to 94 % of the solvent, more preferably 3 to 75 %,
they comprise 0 to 20 % of other additives (as herein before defined), preferably, 0.1 to 10 %,
they comprise less than 3 % by weight of water, preferably less than 1 %.

According to a particular feature of the invention, the components of the compositions are chosen in such a way that the gelled compositions of the invention have a storage modulus (G' measured as hereafter defined, under speed of oscillations of 1 rd/s = radian per seconde) in the range of 1 to 10000 Pascal, preferably in the range of 10 to 5000.

The components of the compositions are chosen in such a way that the gelled compositions of the invention have a viscosity of 1,000 to 30,000 centiposes, more preferably of 1,000 to 6,000 centipoises (these viscosities are Brookfield viscosities measured with a viscosimeter in form of a flat plate rotating at 20 revolutions per minute at 20°C). Low viscosities are generally helpful to get easy dispersibility of the formulation in water by the user (such as the farmer). However, in order to reduce possible leakages when punctures happen, higher viscosities are more favorable.

According to one feature, the compositions used in the invention preferably have a specific gravity greater than 0.8, preferably greater than 0.90 The components of the compositions are also chosen in such a way that the compositions of the invention have a spontaneity (as hereafter defined) less than 25.

The spontaneity is assessed according to the following method: A mixture of 1 ml formulation with 99 ml water are put into a 150 ml glass tube which is stoppered and inverted through 180° (upside down). The number of times (that is to say of inversions) required to disperse 99 % of the formulation is called the spontaneity.

The gel material which is used in the invention is a material which has a phase difference phi between the controlled shear stress and the resulting shear strain such that tg(phi) is less than or equal to 1.5, preferably less than or equal to 1.2. Tg(phi) is the tangent of the phi angle (or phase difference). The measurement of phi is made by means of a dynamic rheometer. Dynamic rheometers which are appropriate to measure phi are known and available commercially. They usually have a flat fixed plate and a rotating cone or plate, or a so-called couette measuring system. Other mechanical systems are also available. Generally the choice of one system or another is made according to the recommandations of the seller of the rheometer, and is adapted to the kind of compound which is tested. The particular choice of a specific type of rheometer is something well known by the man skilled in the art of rheology. A rotating plate over another plate or a cone rotating over a plate are often more appropriate when a gel or a viscous liquid is tested. When two kinds of system for the rheometer are possible, similar values of phi are actually measured. The cone (or the plate or the couette) is caused to rotate by means of a controlled speed motor, the rotation is a sinusoidal one, i.e., the strain and the angular displacement change as a sine function with time. Tg(phi) is equal to the ratio G"/G', wherein: G' is the storage modulus (represents the behaviour of a perfect solid); G" is the loss modulus (represents the behaviour of a perfect liquid). G' and G" are expressed in Pascal for a given rotational speed (radian per second).

G' and G", and thus tg(phi), may depend on the amplitude of the oscillations (percentage of strain) of the rheometer; however, there is generally a so-called viscoelastic plateau whereby the values G' and G" of a gel do not depend substantially on the said amplitude; this means that, in the conditions of the test under the viscoelastic plateau, the structure of the gel is maintained and no destruction of the gel into a liquid happens. Of course, the measurement of G' and G" of a gel is made under the conditions of this viscoelastic plateau, just because it corresponds to the normal gel structure which is precisely what is tested.

G' and G", and thus tg(phi), may also depend on the speed of the oscillations (time to reach the chosen percentage of strain; expressed as radian per seconde) of the rheometer; however, when the gel is well structured, there is not so much variation from one speed to another. In order to have a reasonable measurement of the properties of a gel, it is generally preferred to operate in conditions whereby the gel is not too much stressed, that is to say at speed such as 1 radian per second. Of course, measurements at higher speed may also be made.

Gelling agents are compounds which may be used to obtain gelled compositions, that is to say compositions having properties of a gel as herebefore defind. Thickeners or thickening agent, it is meant a material corresponding to the active ingredient in such a way that, when mixed, at 50/50 w/w and 25°C, with (and optionally ground with) an organic solvent, a thickened suspension can be obtained. The thickeners in the invention can be either liquid or solid at 23°C and have, when they are solid, a particle size lower than 100 microns, preferably less than 20 microns.

Gelling agents or thickeners which may be used in the invention include tetramethyl decyne diol, ethoxylated dialkylphenol, methylated clay, propylene carbonate, hydrogenated castor oil, ethoxylated vegetable oil, dioctyl sodium sulfosuccinate, hexynediol, sodium lauryl sulfate, sodium acetate or benzoate or sulfate, calcium sulfate, polyacrylic acid or its salts; silica or alumina; and mixtures thereof. Low molecular weight polymers can also be used as thickeners.

By the word surfactant, it is meant an organic material which is able to reduce the surface tension of water which is 73 dynes/cm at 20°C.

Surfactants which can be used include lignosulfonic acid salts, phenolsulfonic or naphtalene sulfonic acid salts, polycondensates of ethylene oxide with fatty alcohols or with fatty acids or with fatty amines; substituted phenols such as alkyl- or aryl- phenols; salts of sulfosuccinic acid; taurine derivatives such as alkyl taurides; polycondensates of ethylene oxide with phosphoric acid esters of alcohols or phenols; alkyl aryl polyoxyethylene glycol phosphate esters; alkyl aryl polyoxyethylene ethanol phosphate esters; branched chain alcohol sulfates; dialkyl sulfosuccinates; alkylbenzene sulfonates salts, such as calcium dodecyl benzene sulfonate; ethoxylated tristyryl phenols, and sulfates and phosphates thereof; alkyl poylethoxyether phosphates esters, either in acid or in salt form; ethoxylated fatty acids or alcohols; ethoxylated alkyl phenols or dialkyl phenols; ethoxylated castor oil; ethoxylated propoxylated block copolymers; ethoxylated propoxylated alkylphenol block copolymers; ethoxylated propoxylated tristyrylphenols; glycerol esters especially esters of fatty acids; glycol esters, especially esters of fatty acids; lecithin and lecithin derivatives; sugar esters and other derivatives, as sorbitol, and sucrose or glucose esters or derivatives; sucroglycerides.

By the expression "hazardous product" as used herein is meant a product which may cause damage to the environment or be injurious to a person handling it. Hazardous compounds which are used in agriculture are mainly contemplated in the invention to be contained in water soluble bags with residual inflatability. Such hazardous compounds are ingredients active in agriculture, such as agrochemicals, and more precisely pesticides (such as herbicides, fungicides, insecticides, acaricides, nematicides) or plant protection agents (including plant growth regulators or plant nutrient) or adjuvants for the activity for plants as activity promoters including penetrating agents, synergists, antidotes, sticking agents, spreaders, activators, and compatibility agents. Pesticides are however preferred.

A list of many agrochemicals which can be used in the invention includes :

Fungicides such as Triadimefon, Tebuconazole, Prochloraz, Triforine, Tridemorph, Propiconazole, Pirimicarb, Iprodione, Metalaxyl, Bitertanol, Iprobenfos, Flusilazol, Fosetyl, Propyzamide, Chlorothalonil, Dichlone, Mancozeb, Anthraquinone, Maneb, Vinclozolin, Fenarimol, Bendiocarb, Captafol, Benalaxyl, Thiram, Chlorothalonil, Captan, Zineb, Tridimefon, Metalaxyl, Iprodione, Fenarimol, Sulfur, Quintozene, copper salts, Vinclozolin, Thiophanate-methyl, Tricyclazole, Dicloran, Benomyl,

Herbicides (or defoliants) such as quizalofop and its derivatives, Acetochlor, Metolachlor, Imazapur and Imazapyr, Glyphosate and Gluphosinate, Butachlor, Acifluorfen, Oxyfluorfen, Butralin, Fluazifop-butyl, Bifenox, Bromoxynil, Ioxynil, Diflufenican, Phenmedipham, Desmedipham, Oxadiazon, Mecopropo, MCPA, MCPB, MCPP, Linuron, Isoproturon, Flamprop and its Derivatives, Ethofumesate, Diallate, Carbetamide, Alachlor, Metsulfuron, Chlorsulfuron, Chlorpyralid, 2,4-d, Tribufos, Triclopyr, Diclofop-methyl, Sethoxydim, Pendimethalin, Trifluralin, Ametryn, Chloramben, Amitrole, Asulam, Bentazone, Atrazine, Cyanazine, Thiobencarb, Prometryn, 2-(2-chlorobenzyl)-4,4-dimethy-1-1,2-oxazolidin-3-one, Fluometuron, Napropamide, Paraquat, Bentazole, Molinate, Propachlor, Imazaquin, Metribuzin, Tebuthiuron, Oryzalin, Dicamba, Bromoxynil ester, Pursuit, Norflurazon, Simazine, Acifluorfen sodium, Trichlopyr, sulfonylureas and Trialkoxydim,

Insecticides or nematicides such as Ebufos, Carbosulfan, Amitraz, Vamidothion, Ethion, Triazophos, Propoxur, Permethrin, Cypermethrin, Parathion, Methylparathion, Diazinon, Methomyl, Lindane, Fenvalerate, Ethoprophos, Endrin, Endosulfan, Dimethoate, Dieldrin, Dicrotophos, Dichlorprop, Dichlorvos, Azinphos and its derivatives, Aldrin, Cyfluthrin, Deltamethrin, Disulfoton, Chlordimeform, Chlorpyrifos, Carbaryl, Dicofol, Thiodicarb, Propargite, Demeton, Phosalone, Acephate, Azinophosmethyl, Carbazyl, Carbofuran, Methamidofos, Fenbutalin oxide, Trichlorfon, Abamectin, Aldicarb, Malathion, and pyrethroids, Bacillis Thuringensis,

Plant growth regulators such as gibberellic acid, Ethrel or Ethephon, Cycocel, Chlormequat, Ethephon, Dimethipin, Mepiquat,

and other biological biocides and mixtures thereof.

The preparation or manufacturing of the compositions of the invention can be made by any known method. A convenient way is to mix together the different constituents of the mixture/composition and to stir them, optionally with grinding or milling and/or heating. Grinding and/or milling are generally necessary in order to obtain the active ingredient in the form of particles to be suspended having the size as hereinbefore defined. Sometimes it is easier to operate with a slow addition of the constituents of the composition and it might be also useful that the thickening agent is added last.

The chemical nature of the enveloping film constituting the bags which may contain the composition/gels of the invention can vary quite widely. Suitable materials are water soluble or water dispersible, preferably water soluble, materials which are insoluble in the organic solvents used to dissolve or disperse the active ingredient. Specific suitable materials include polyethylene oxide, such as polyethylene glycol; starch and modified starch; alkyl and hydroxyalkylcellulose, such as hydroxymethylcellulose, hydroxyethylcellulose, hydroxypropylcellulose; carboxymethylcellulose; polyvinylethers such as poly methyl vinylether; poly(2,4-dimethyl-6-triazolylethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; but preferably the enveloping film comprises or is made from polyvinylalcohol (PVA). It might be that some active ingredients, may react with some polymers constituting the wall of the bags; in such a situation, the material constituting the wall of the bag is changed into a material which is inert to the active ingredient.

Preferred material for constituting the bags used in the invention include polyethylene oxide or methylcellulose, or polyvinylalcohol. When polyvinylalcohol is used, it is advantageously a 40-100%, preferably 80-99% alcoholized or hydrolysed, polyvinyl acetate film.

The films which are used to make the bags may be any water soluble or water dispersible film known per se. In order to make a bag, the film needs to be shaped (possibly partially sealed) and then filled with the composition comprising the hazardous compound. When filled (as hereinbefore defined), the bag is closed generally by sealing, for example heat sealing.

According to the invention, the bags are not completely filled with the hazardous compositions. They are only partially filled and then sealed. When they are sealed, they may be sealed close to the hazardous composition so as to include either no air space or only very little air space. They may also be closed so as to maintain some air space between the composition and the wall of the bag. Nevertheless, in all cases the bag when filled, is not expanded so as to be completely inflated. On the contrary, the walls of the bag are maintained in such a position that further substance could be put in the bag if this were desired, and the bag is closed (generally by sealing) before it is completely inflated.

The invention relates also to a method of manufacturing the containerisation systems of the present invention which method comprises manufacturing a water soluble or water dispersible bag by partially filling the bag with a concentrated hazardous composition, and closing the filled bag to provide a residual inflatability therein of greater than 15% of the volume of the bag when fully inflated.

The invention relates also to the use of the containerisation system of the present invention in the storage or transport of agrochemicals. Such use may provide effective protection of the agricultural environment.

The containerisation systems of the invention may be used to provide spray mixtures, suitable for use in agriculture, by dissolving or dispersing them in water, for example in a spray tank.

The following examples are given for illustrative purposes.

**EXAMPLES**

The following general procedure was used.

The water soluble film which was used to make the water soluble bag is known. In order to make a bag, the film was shaped and partially sealed and then partially filled with a composition of the invention. This composition was able to flow, even if at a slow rate due to the high viscosity. When filled, the bag was heat sealed to close it.

The concentrated composition was prepared by adding the ingredients and additives while shearing and/or milling (attrition milling), until the proper particle size and viscosity was achieved.

The Brookfield viscosity was measured, as previously indicated, with a Brookfield viscosimeter which had a flat plate rotating at 20 revolutions per minute at 20°C.

Tg(phi) is measured as previously indicated with a dynamic rheometer (sold in USA under the name RFS) with a percentage of strain of 1 % and a speed of oscillations of 1 rd/s. Tg(phi) as measured was less than 0.5 and G' was found at a value between 50 and 400 Pascal.

EXAMPLE 1

The components are listed below and the per cent given:

| COMPONENT | PERCENT |
|---|---|
| Bromoxynil octanoate (active ingredient) | 28.7 |
| Bromoxynil heptanoate (active ingredient) | 27.6 |
| Alkyl benzenes with 10 -12 carbon atoms (flash point 150 °C ; solvent) | 31.65 |
| Polydimethylsiloxane (antifoaming agent) | 0.05 |
| Calcium dodecylbenzene sulfonate (emulsifier) | 5.0 |
| Polyalkylene glycol ether (emulsifier) | 4.0 |
| Sodium lauryl sulfate (gelling agent) | 2.0 |
| Dioctyl sodium sulfosuccinate + sodium benzoate blend (gelling agent) | 0.75 |
| Sodium acetate (buffering agent) | 0.25 |

The components are mixed together. The viscosity of this mixture is approximately 4000 centipoise. The spontaneity is 12.

This formulation is then packaged in water soluble polyvinyl alcohol bag. The bag is made from a folded polyvinyl alcohol film. The polyvinyl alcohol is cold water soluble and has a hydrolysis rate of acetate groups of 88 % . The film is folded so as to form a vertical tube and heat sealed according to an horizontal line at the bottom; a second seal is made according to a vertical line crossing the first seal at the lowest part of the seal; after filling, the closing of the bag is made through a third seal which is made according to a horizontal line crossing the vertical seal at its upper part.

The bag could have been filled up to a volume of 1288 ml if completely filled. Only 938 ml of pesticidal composition are put into the bag, leaving very little air space (less than 1 %). Thus the residual inflatability is about 27 %

100 identical bags were dropped 2 times from 1.2 m upon the ground. No breaking or leakage was observed.

EXAMPLES 2 to 5

Similar bags with similar residual inflatability are prepared with followng specificities :

Example 2

| Ethoprop | 72.0 % |
|---|---|
| Phosphate Ester | 5.0 % |
| Aromatic Solvent | 16.5 % |
| Polyacrylic Acid Resin | 1.5 % |
| Water | 2.0 % |
| Sodium Salt Of Polymeric Carboxylic Acid | 3.0 % |

The ingredients are mixed together by stirring with a mixer. The product gels during mixing procedure. The gelled product is then poured into a water soluble bag. Its Brookfield viscosity is 2800 cps.

1000 ml of the gel were poured into a polyvinylalcohol cold water soluble bag and heat sealed. The residual inflatability of this bag was about 20 % and a very small air space (less than 1 %) was present. 100 filled bags were made in the same way and dropped from 1.38 m. No bag broke.

Example 3

| Bromoxynil Octanoate | 60.0 % |
|---|---|
| Aromatic Solvent | 27.8 % |
| Silicone Antifoam | 0.05 % |
| Sodium Acetate Buffer | 0.9 % |
| Na Salt of Alkylsulfate | 1.5 % |
| Mixture of Alkylsulfosuccinate and Sodium Benzoate | 0.75 % |
| Alkylarylsulfonate | 5.0 % |
| Polyalkylene Glycol Ether | 4.0 % |

The mixture is passed through an attrition mill. The gel forms over a 12 hour period. 1000 ml are poured into polyvinyl alcohol bag. Its Brookfield viscosity is 3200 cps.

1000 ml of the gel were poured into a polyvinylalcohol cold water soluble bag and heat sealed. The residual inflatability of this bag was about 16.6 % and a very small air space (less than 1 %) was present. 10 filled bags were made in the same way and dropped repeatedly from 92 cm until each failed. The drop average required to reach failure was 23.

Example 4

| Mixed (50/50) Esters of Bromoxynil Octanoate and Heptanoate | 38.3 % |
|---|---|
| Aromatic Solvent | 7.25 % |

(continued)

| Silicone Antifoam | 0.05 % |
|---|---|
| Na Salt of Alkylsulfate | 1.0 % |
| Mixture of Alkylsulfosuccinate and Sodium Benzoate | 0.4 % |
| Alkylarylsulfonate | 4.0 % |
| Polyalkylene Glycol Ether | 5.0 % |
| Isooctyl ester of methylchloro propionic aced | 43.5 % |
| Sodium Acetate | 0.5 % |

The mixture is passed through an attrition mill. The gel forms over a 12 hour period. 1000 ml are poured into polyvinyl alcohol bag. Its Brookfield viscosity is 4200 cps.

500 ml of the gel were poured into a polyvinylalcohol cold water soluble bag and heat sealed. The residual inflatability of this bag was 25 % and almost no air space was present. 100 filled bags were made in the same way and dropped from 1.63 m. Only 1 bag broke at the seal.

Example 5

| 2,4-D Butoxyethyl Ester | 86.6 % |
|---|---|
| Nonionic/anionic Emulsifier Blend | 7.0 % |
| Aromatic Solvent | 2.4 % |
| Alkylaryl Sulfonate Sodium Salt | 4.0 % |

The mixture is passed through an attrition mill at 40° C. The gel forms over a 48 hour period. 800 ml are poured into polyvinyl alcohol bag. Its Brookfield viscosity is 4200 cps.

800 ml of the gel were poured into a polyvinylalcohol cold water soluble bag and heat sealed. The residual inflatability of this bag was about 20 % and almost no air space was present. 25 filled bags were made in the same way and dropped repeatedly from 92 cm until each failed. The drop average required to reach failure was 26.

## Claims

1. A containerisation system which comprises a concentrated hazardous composition contained in a cold water soluble or water dispersible bag wherein the bag has a residual inflatability of greater than 15% of the volume of the bag when fully inflated and wherein the hazardous composition is in the form of a gel having a viscosity from 1,000 to 30,000 centipoises, a spontaneity less than 25, and a phase difference (phi) between the controlled shear stress and the resulting shear strain such that tg(phi) is less than or equal to 1.5.

2. A containerisation system according to claim 1 wherein the hazardous composition comprises a compound active in agriculture.

3. A containerisation system according to claim 2 wherein the hazardous composition comprises an agrochemical.

4. A containerisation system according to claim 3 wherein the hazardous composition comprises a pesticide.

5. A containerisation system according to claim 3 or 4 wherein the hazardous composition comprises a compound which is a herbicide, a fungicide, an insecticide, an acaricide, a nematicide, a plant protection agent, a plant growth regulator, a plant nutrient, an adjuvant for the activity for plants, an activity promoter, a penetrating agent, a synergist, an antidote, a sticking agent, a spreader, an activator or a compatibility agent.

6. A containerisation system according to any one of the preceding claims wherein the composition has a viscosity from 1,000 to 6,000 centipoises.

7. A containerisation system according to any one of the preceding claims, wherein the composition is a gel having a phase difference (phi) between the controlled shear stress and the resulting shear strain such that tg(phi) is less than or equal to 1.2.

8. A containerisation system according to any one of the preceding claims wherein the bag has a residual inflatability less than 70% of the volume of the inflated bag.

9. A containerisation system according to claim 8 wherein the bag has a residual inflatability less than 40% of the volume of the inflated bag.

10. A containerisation system according to any one of the preceding claims wherein the bag has an air or gas space of less than 20% of the volume of the bag.

11. A containerisation system according to claim 10 wherein the bag has a residual inflatability greater than 10% of the volume of the inflated bag, and an air or gas space of less than 20% of the volume of the bag.

12. A containerisation system according to claim 10 or 11 wherein the bag has an air or gas space of less than 10% of the volume of the bag.

13. A containerisation system according to claim 12 wherein the bag has no air or gas space or an air or gas space less than 1% of the volume of the bag.

14. A containerisation system according to any one of the preceding claims wherein the composition comprises from 1% to 95% by weight of hazardous product.

15. A containerisation system according to claim 14 wherein the composition comprises from 15% to 80% by weight of hazardous product.

16. A containerisation system according to claim 15 wherein the composition comprises from 20% to 60% by weight of hazardous product.

17. A containerisation system according to any one of the preceding claims wherein the composition comprises suspended particles, whose size is less than 50 micrometres ($\mu$m).

18. A containerisation system according to claim 17 wherein the composition comprises suspended particles, whose size is less than 20 micrometres ($\mu$m).

19. A containerisation system according to any one of claims 14 to 18 wherein the composition comprises from 1 to 95% by weight of hazardous product, 0.1 to 50% by weight of surfactant, 0 to 50% by weight of thickener or gelling agent, 0 to 94% by weight of solvent, 0 to 20% by weight of other additives, and less than 3% by weight of water.

20. A containerisation system according to claim 19 wherein the composition comprises from 1 to 95% by weight of hazardous product, 2 to 15% by weight of surfactant, 1 to 10% by weight of thickener or gelling agent, 3 to 75% by weight of solvent, 0.1 to 10% by weight of other additives, and less than 1% by weight of water.

21. A containerisation system according to any one of the preceding claims wherein the composition has a specific gravity greater than 0.8.

22. A containerisation system according to any one of the preceding claims wherein the composition is a gel having a storage modulus from 1 to 10,000 Pascal.

23. A containerisation system according to any one of the preceding claims wherein the water soluble or water dispersible bag comprises an enveloping film comprising polyethylene oxide, polyethylene glycol; starch or modified starch, alkyl or hydroxyalkylcellulose; carboxymethylcellulose; a polyvinylether; poly(2,4-dimethyl-6-triazolylethylene); poly(vinylsulfonic acid); a polyanhydride; a low molecular weight urea-formaldehyde resin; a low molecular weight melamine-formaldehyde resin; poly(2-hydroxyethyl methacrylate); polyacrylic acid; or polyvinylalcohol.

24. A method of manufacturing a containerisation system as claimed in any one of the preceding claims which method comprises manufacturing a water soluble or water dispersible bag, by partially filling the bag with a concentrated hazardous gelled composition, and closing the filled bag to provide a residual inflatability therein of greater than 15% of the volume of the bag when fully inflated.

25. Use of a containerisation system as claimed in any one of claims 1 to 23 in the storage or transport of agrochemicals.

**Patentansprüche**

1. Containerisierungs- oder Behältersystem, das eine konzentrierte gefährliche Zusammensetzung umfaßt, die in einem in kaltem Wasser löslichen oder in Wasser dispergierbaren Beutel enthalten ist, wobei der Beutel eine restliche Aufblasbarkeit von mehr als 15 % des Volumens des Beutels, wenn dieser vollständig aufgeblasen ist, aufweist und wobei die gefährliche Zusammensetzung in Form eines Gels mit einer Viskosität von 1000 bis 30000 Centipoise, einer Spontanität von weniger als 25 und einem derartigen Phasenunterschied (phi) zwischen der kontrollierten Scherspannung und der resultierenden Schiebung, daß tg(phi) weniger als oder gleich 1,5 ist, vorliegt.

2. Containerisierungssystem nach Anspruch 1, wobei die gefährliche Zusammensetzung eine in der Landwirtschaft aktive Verbindung umfaßt.

3. Containerisierungssystem nach Anspruch 2, wobei die gefährliche Zusammensetzung eine Agrochemikalie umfaßt.

4. Containerisierungssystem nach Anspruch 3, wobei die gefährliche Zusammensetzung ein Pestizid umfaßt.

5. Containerisierungssystem nach Anspruch 3 oder 4, wobei die gefährliche Zusammensetzung eine Verbindung umfaßt, die ein Herbizid, ein Fungizid, ein Insektizid, ein Akarizid, ein Nematizid, ein Pflanzenschutzmittel, ein Pflanzenwachstumsregulator, ein Pflanzennährstoff, ein Aktivitätsadjuvans für Pflanzen, ein Aktivitätspromotor, ein Penetriermittel, eine synergistisch wirkende Verbindung, ein Antidot, ein Haftmittel, ein Netzmittel, ein Aktivator oder ein Kompatibilitätsmittel ist.

6. Containerisierungssystem nach einem der vorangegangenen Ansprüche, wobei die Zusammensetzung eine Viskosität von 1000 bis 6000 Centipoise aufweist.

7. Containerisierungssystem nach einem der vorangegangenen Ansprüche, wobei die Zusammensetzung ein Gel mit einer derartigen Phasendifferenz (phi) zwischen der kontrollierten Scherspannung und der resultierenden Schiebung, daß tg(phi) weniger als oder gleich 1,2 ist, ist.

8. Containerisierungssystem nach einem der vorangegangenen Ansprüche, wobei der Beutel eine restliche Aufblasbarkeit von weniger als 70% des Volumens des aufgeblasenen Beutels aufweist.

9. Containerisierungssystem nach Anspruch 8, wobei der Beutel eine restliche Aufblasbarkeit von weniger als 40% des Volumens des aufgeblasenen Beutels aufweist.

10. Containerisierungssystem nach einem der vorangegangenen Ansprüche, wobei der Beutel einen Luft- oder Gasraum von weniger als 20% des Beutelvolumens aufweist.

11. Containerisierungssystem nach Anspruch 10, wobei der Beutel eine restliche Aufblasbarkeit von mehr als 10% des Volumens des aufgeblasenen Beutels und einen Luft- oder Gasraum von weniger als 20% des Beutelvolumens aufweist.

12. Containerisierungssystem nach Anspruch 10 oder 11, wobei der Beutel einen Luft- oder Gasraum von weniger als 10% des Beutelvolumens aufweist.

13. Containerisierungssystem nach Anspruch 12, wobei der Beutel keinen Luft- oder Gasraum oder einen Luft- oder Gasraum von weniger als 1% des Beutelvolumens aufweist.

**14.** Containerisierungssystem nach einem der vorangegangenen Ansprüche, wobei die Zusammensetzung 1 Gew.-% bis 95 Gew.-% gefährliches Produkt umfaßt.

**15.** Containerisierungssystem nach Anspruch 14, wobei die Zusammensetzung 15 Gew.-% bis 80 Gew.-% gefährliches Produkt umfaßt.

**16.** Containerisierungssystem nach Anspruch 15, wobei die Zusammensetzung 20 Gew.-% bis 60 Gew.-% gefährliches Produkt umfaßt.

**17.** Containerisierungssystem nach einem der vorangegangenen Ansprüche, wobei die Zusammensetzung suspendierte Teilchen, deren Größe weniger als 50 Mikrometer ($\mu$m) beträgt, umfaßt.

**18.** Containerisierungssystem nach Anspruch 17, wobei die Zusammensetzung suspendierte Teilchen, deren Größe weniger als 20 Mikrometer ($\mu$m) beträgt, umfaßt.

**19.** Containerisierungssystem nach einem der Ansprüche 14 bis 18, wobei die Zusammensetzung 1 bis 95 Gew.-% gefährliches Produkt, 0,1 bis 50 Gew.-% grenzflächenaktives Mittel, 0 bis 50 Gew.-% Verdickungs- oder Geliermittel, 0 bis 94 Gew.-% Lösemittel, 0 bis 20 Gew.-% andere Additive und weniger als 3 Gew.-% Wasser umfaßt.

**20.** Containerisierungssystem nach Anspruch 19, wobei die Zusammensetzung 1 bis 95 Gew.-% gefährliches Produkt, 2 bis 15 Gew.-% grenzflächenaktives Mittel, 1 bis 10 Gew.-% Verdickungs- oder Geliermittel, 3 bis 75 Gew.-% Lösemittel, 0,1 bis 10 Gew.-% andere Additive und weniger als 1 Gew.-% Wasser umfaßt.

**21.** Containerisierungssystem nach einem der vorangegangenen Ansprüche, wobei die Zusammensetzung eine relative Dichte über 0,8 aufweist.

**22.** Containerisierungssystem nach einem der vorangegangenen Ansprüche, wobei die Zusammensetzung ein Gel mit einem Speichermodul E' von 1 bis 10000 Pascal ist.

**23.** Containerisierungssystem nach einem der vorangegangenen Ansprüche, wobei der wasserlösliche oder in Wasser dispergierbare Beutel eine Umhüllungsfolie, umfassend Polyethylenoxid, Polyethylenglycol, Stärke oder modifizierte Stärke, Alkyl- oder Hydroxyalkylcellulose, Carboxymethylcellulose, einen Polyvinylether, Poly(2,4-dimethyl-6-triazolylethylen), Poly(vinylsulfonsäure), ein Polyanhydrid, ein Harnstoff-Formaldehydharz mit niedrigem Molekulargewicht, ein Melamin-Formaldehydharz mit niedrigem Molekulargewicht, Poly(2-hydroxyethylmethacrylat), Polyacrylsäure oder Polyvinylalkohol, umfaßt.

**24.** Verfahren zum Herstellen eines Containerisierungssystems nach einem der vorangegangenen Ansprüche, wobei das Verfahren umfaßt, einen wasserlöslichen oder in Wasser dispergierbaren Beutel herzustellen, den Beutel teilweise mit einer konzentrierten gefährlichen gelierten Zusammensetzung zu füllen und den gefüllten Beutel zu verschließen unter Vorsehen einer restlichen Aufblasbarkeit von mehr als 15% des Volumens des Beutels, wenn er vollständig aufgeblasen ist, darin.

**25.** Verwendung eines Containerisierungssystems nach einem der Ansprüche 1 bis 23 bei der Lagerung oder dem Transport von Agrochemikalien.

**Revendications**

**1.** Système de conteneurisation qui comprend une composition dangereuse concentrée contenue dans un sac soluble dans l'eau froide ou dispersable dans l'eau, dans lequel le sac a une possibilité de gonflement résiduelle supérieure à 15 % du volume du sac lorsqu'il est complètement gonflé et dans lequel la composition dangereuse est sous la forme d'un gel ayant une viscosité de 1000 à 30 000 centipoises, une spontanéité inférieure à 25 et une différence de phases ($\varphi$) entre la contrainte de cisaillement réglée et la déformation de cisaillement obtenue telle que tg($\varphi$) soit inférieure ou égale à 1,5.

**2.** Système de conteneurisation selon la revendication 1, dans lequel la composition dangereuse comprend un composé actif en agriculture.

**3.** Système de conteneurisation selon la revendication 2, dans lequel la composition dangereuse comprend un produit agrochimique.

4. Système de conteneurisation selon la revendication 3, dans lequel la composition dangereuse comprend un pesticide.

5. Système de conteneurisation selon la revendication 3 ou 4, dans lequel la composition dangereuse comprend un composé qui est un herbicide, un fongicide, un insecticide, un acaricide, un nématicide, un agent phytosanitaire, un régulateur de la croissance des plantes, un élément nutritif pour plantes, un adjuvant d'activité pour des plantes, un agent favorisant l'activité, un agent de pénétration, un agent augmentant la synergie, un antidote, un agent d'adhésivité, un distributeur, un activateur ou un agent de compatibilité.

6. Système de conteneurisation selon l'une quelconque des revendications précédentes, dans lequel la composition a une viscosité de 1000 à 6000 centipoises.

7. Système de conteneurisation selon l'une quelconque des revendications précédentes, dans lequel la composition est un gel ayant une différence de phases ($\varphi$) entre la contrainte de cisaillement réglée et la déformation de cisaillement obtenue telle que tg($\varphi$) soit inférieure ou égale à 1,2.

8. Système de conteneurisation selon l'une quelconque des revendications précédentes, dans lequel le sac a une possibilité de gonflement résiduelle inférieure à 70 % du volume du sac gonflé.

9. Système de conteneurisation selon la revendication 8, dans lequel le sac a une possibilité de gonflement résiduelle inférieure à 40 % du volume du sac gonflé.

10. Système de conteneurisation selon l'une quelconque des revendications précédentes, dans lequel le sac a un espace d'air ou de gaz inférieur à 20 % du volume du sac.

11. Système de conteneurisation selon la revendication 10, dans lequel le sac a une possibilité de gonflement résiduelle supérieure à 10 % du volume du sac gonflé, et un espace d'air ou de gaz inférieur à 20 % du volume du sac.

12. Système de conteneurisation selon la revendication 10 ou 11, dans lequel le sac a un espace d'air ou de gaz inférieur à 10 % du volume du sac.

13. Système de conteneurisation selon la revendication 12, dans lequel le sac n'a pas d'espace de gaz ou d'air, ou a un espace de gaz ou d'air inférieur à 1 % du volume du sac.

14. Système de conteneurisation selon l'une quelconque des revendications précédentes, dans lequel la composition comprend de 1 % à 95 % en poids de produit dangereux.

15. Système de conteneurisation selon la revendication 14, dans lequel la composition comprend de 15 % à 80 % en poids de produit dangereux.

16. Système de conteneurisation selon la revendication 15, dans lequel la composition comprend de 20 % à 60 % en poids de produit dangereux.

17. Système de conteneurisation selon l'une quelconque des revendications précédentes, dans lequel la composition comprend des particules en suspension, dont la taille est inférieure à 50 micromètres ($\mu$m).

18. Système de conteneurisation selon la revendication 17, dans lequel la composition comprend des particules en suspension, dont la taille est inférieure à 20 micromètres ($\mu$m).

19. Système de conteneurisation selon l'une quelconque des revendications 14 à 18, dans lequel la composition comprend de 1 à 95 % en poids de produit dangereux, de 0,1 à 50 % en poids d'agent tensio-actif, de 0 à 50 % en poids d'un agent épaississant ou gélifiant, de 0 à 94 % en poids de solvant, de 0 à 20 % en poids d'autres additifs et moins de 3 % en poids d'eau.

20. Système de conteneurisation selon la revendication 19, dans lequel la composition comprend de 1 à 95 % en poids de produit dangereux, de 2 à 15 % en poids d'agent tensio-actif, de 1 à 10 % en poids d'un agent épaississant ou gélifiant, de 3 à 75 % en poids de solvant, de 0,1 à 10 % en poids d'autres additifs et moins de 1 % en poids d'eau.

21. Système de conteneurisation selon l'une quelconque des revendications précédentes , dans lequel la composition a une masse spécifique supérieure à 0,8.

22. Système de conteneurisation selon l'une quelconque des revendications précédentes , dans lequel la composition est un gel ayant un module de stockage de 1 à 10 000 Pascals.

23. Système de conteneurisation selon l'une quelconque des revendications précédentes , dans lequel le sac soluble dans l'eau ou dispersable dans l'eau comprend un film d'enveloppement comprenant du polyoxyéthylène, du polyéthylèneglycol ; de l'amidon ou un amidon modifié, une alkyl- ou hydroxyalkylcellulose ; une carboxyméthylcellulose ; un éther polyvinylique ; un poly(2,4-diméthyl-6-triazolyléthylène) ; un poly(acide vinylsulfonique) ; un polyanhydride ; une résine urée-formaldéhyde de faible poids moléculaire ; une résine mélamine-formaldéhyde de faible poids moléculaire ; un poly(méthacrylate de 2-hydroxyéthyle) ; un acide polyacrylique ou un alcool polyvinylique.

24. Procédé de fabrication d'un système de conteneurisation selon l'une quelconque des revendications précédentes, lequel procédé comprend la fabrication d'un sac soluble dans l'eau ou dispersable dans l'eau, en remplissant partiellement le sac avec une composition gélifiée dangereuse concentrée, et en fermant le sac rempli pour réaliser à l'intérieur une possibilité de gonflement résiduelle supérieure à 15 % du volume du sac lorsqu'il est complètement gonflé.

25. Utilisation d'un système de conteneurisation selon l'une quelconque des revendications 1 à 23 pour le stockage ou le transport de produits agrochimiques.